(19) Europäisches Patentamt
European Patent Office
Office européen des brevets

(11) EP 4 717 724 A1

(12) EUROPEAN PATENT APPLICATION
published in accordance with Art. 153(4) EPC

(43) Date of publication:
01.04.2026 Bulletin 2026/14

(21) Application number: 24810814.4

(22) Date of filing: 22.04.2024

(51) International Patent Classification (IPC):
*C08G 63/60* (2006.01) *C08K 3/013* (2018.01)
*C08L 67/00* (2006.01)

(52) Cooperative Patent Classification (CPC):
C08G 63/60; C08K 3/013; C08L 67/00

(86) International application number:
PCT/JP2024/015713

(87) International publication number:
WO 2024/241806 (28.11.2024 Gazette 2024/48)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 23.05.2023 JP 2023084621

(71) Applicant: Toray Industries, Inc.
Tokyo 103-8666 (JP)

(72) Inventors:
- TANABE, Junki
Nagoya-shi, Aichi 455-8502 (JP)
- KONISHI, Akito
Nagoya-shi, Aichi 455-8502 (JP)
- NAKAGAWA, Hiroshi
Nagoya-shi, Aichi 455-8502 (JP)
- UMETSU, Hideyuki
Nagoya-shi, Aichi 455-8502 (JP)

(74) Representative: Mewburn Ellis LLP
Aurora Building
Counterslip
Bristol BS1 6BX (GB)

# (54) LIQUID CRYSTAL POLYESTER RESIN, LIQUID CRYSTAL POLYESTER RESIN COMPOSITION, AND MOLDED ARTICLE FORMED THEREOF

(57) A liquid crystal polyester resin including 20 to 80 mol% of a structural unit derived from an aromatic hydroxycarboxylic acid, 10 to 40 mol% of a structural unit derived from an aromatic diol and 10 to 40 mol% of a structural unit derived from an aromatic dicarboxylic acid, relative to 100 mol% of the total structural units of the liquid crystal polyester resin, wherein when the liquid crystal polyester resin is maintained at a temperature of the melting point Tm + 20°C under reduced pressure of 13.3 kPa or less for 60 minutes, the total amount of an aromatic carboxylic acid and acetic acid generated from the liquid crystal polyester resin is not more than 300 ppm. The resulting liquid crystal polyester resin is excellent in flame retardancy and exhibits suppressed drooling during injection molding.

EP 4 717 724 A1

## Description

### Technical Field

The present invention relates to a liquid crystal polyester resin, a liquid crystal polyester resin composition, and a molded article formed therefrom. More particularly, the present invention relates to a liquid crystal polyester resin, a liquid crystal polyester resin composition, and a molded article obtained by using the same.

### Background Art

A liquid crystal polyester resin is excellent in heat resistance, fluidity and dimensional stability, and is therefore used for electric and electronic components which require to have these properties. In recent years, due to miniaturization of smartphones and the like, there is an increasing demand for higher integration, thinner walls and lower profiles of components, and thus liquid crystal polyester resins with enhanced fluidity are required as materials for these components. Meanwhile, when the viscosity of the liquid crystal polyester resin is reduced to ensure thin-wall flowability, the amount of gas components increases during melt processing, and therefore, a liquid crystal polyester resin having low gas properties is being investigated. The liquid crystal polyester resin having low gas properties can prevent gas components generated during melt processing from being retained inside molded articles, and can also suppress gas generated during a heat treatment at relatively low temperature (up to 280°C) below the melting point, such as reflow processing. Molded articles in which gas generation is suppressed have excellent processability and can suppress deterioration during long-term use, so that low gas properties are required not only for materials but also for molded articles.

For example, Patent Literature 1 discloses that a liquid crystalline resin containing controlled amounts of acetic acid, phenol and carbon dioxide gas can be achieved by controlling an acetylation rate of an aromatic diol used to be lower than usual. Patent Literature 2 discloses that the generation of gas such as phenol can be reduced by obtaining a wholly aromatic polyester resin composed of structural units derived from 6-hydroxy-2-naphthoic acid, 4,4'-dihydroxybiphenyl, hydroquinone and terephthalic acid without using p-hydroxybenzoic acid which is a cause of phenol gas. Patent Literature 3 discloses that fogging caused by gas generated from the polymer can be reduced by controlling the type and ratio of terminal groups of a wholly aromatic liquid crystal polyester within a specific range. Patent Literature 4 proposes a liquid crystal polyester resin that includes p-hydroxybenzoic acid as a main component and structural units derived from 6-hydroxy-2-naphthoic acid, 4,4'-dihydroxybiphenyl, hydroquinone and terephthalic acid, thereby reducing blisters caused by generated gas and improving low warpage. Meanwhile, due to the recent increase in the complexity of component shapes, molded articles are increasingly being produced under high temperature and high injection speed (high shear) conditions in injection molding in order to fill thin-walled areas, and it has become difficult to achieve resin properties currently required with conventional liquid crystal polyester resins.

### Citation List

### Patent Literature

Patent Literature 1: JP 2006-89714 A
Patent Literature 2: JP 2009-127025 A
Patent Literature 3: WO 2012/090407
Patent Literature 4: WO 2018/101214

## Summary of Invention

### Technical Problem

When the liquid crystal polyester resin is melt-kneaded using a twin-screw extruder or processed using an injection molding machine, it is subjected to high temperature and shear, and in some cases to reduced pressure conditions, which causes various types of gases to be generated due to decomposition of the resin. Depending on the composition of the gas generated, particularly under conditions of high temperature and high injection speed, this can induce gas expansion and resin decomposition, thus making it more likely to cause drooling (a phenomenon of leakage and sagging from the tip of the nozzle during molding) and stringiness (a phenomenon where a resin that has not completely solidified extends in filaments from the tip of a sprue at the time of mold opening). Furthermore, under high temperature conditions such as exposure to flame, the flame retardancy may deteriorate depending on the type of gas

generated. The liquid crystal polyester resin has excellent flame retardancy compared with other resins, but with the recent trend toward thinner materials, there is a demand for more excellent flame retardancy. Conventional liquid crystal polyester resins have been inadequate in controlling gas generated under more severe conditions. For example, Patent Literature 1 mentioned above discloses a liquid crystal polyester resin in which the generation of phenol, acetic acid and carbon dioxide gas components is suppressed when the resin is maintained at a temperature of melting point + 10°C for 30 minutes in a helium gas atmosphere. However, there is a problem in that gas components that affect moldability and flame retardancy (e.g., aromatic carboxylic acids) and gas components that are generated under reduced pressure conditions that correlate well with moldability and flame retardancy are not controlled. Similarly, Patent Literatures 2 to 4 also provide insufficient control of gas components that may cause drooling.

An object of the present invention is to provide a liquid crystal polyester resin, a liquid crystal polyester resin composition and a molded article formed therefrom, which exhibit suppressed gas generation that causes drooling during injection molding at high temperature, and are excellent in flame retardancy. Solution to Problem

As a result of an intensive study to solve the above problems, the present inventors have found that a liquid crystal polyester resin including 20 to 80 mol% of a structural unit derived from an aromatic hydroxycarboxylic acid, 10 to 40 mol% of a structural unit derived from an aromatic diol and 10 to 40 mol% of a structural unit derived from an aromatic dicarboxylic acid, relative to 100 mol% of the total structural units of the liquid crystal polyester, in which the gas components generated under the conditions mentioned below are controlled, is excellent in moldability and flame retardancy, thus achieving the present invention.

That is, the present invention is as follows:

(1) A liquid crystal polyester resin comprising 20 to 80 mol% of a structural unit derived from an aromatic hydroxycarboxylic acid, 10 to 40 mol% of a structural unit derived from an aromatic diol and 10 to 40 mol% of a structural unit derived from an aromatic dicarboxylic acid, relative to 100 mol% of the total structural units of the liquid crystal polyester resin, wherein the following requirement ($\alpha$) is satisfied: Requirement ($\alpha$): when the liquid crystal polyester resin is maintained at a temperature of the melting point Tm + 20°C under reduced pressure of 13.3 kPa or less for 60 minutes, the total amount of an aromatic carboxylic acid and acetic acid generated from the liquid crystal polyester resin is less than 300 ppm; and

the melting point Tm of the liquid crystal polyester resin is an endothermic peak temperature determined as follows: after observation of an endothermic peak temperature ($Tm_1$) observed when the liquid crystal polyester resin is heated under temperature rising conditions of 20°C/min from room temperature in differential scanning calorimetry, the liquid crystal polyester resin is maintained at a temperature of $Tm_1$ + 20°C for 5 minutes, and then the liquid crystal polyester resin is once cooled to room temperature under temperature falling conditions of 20°C/min and then heated again under temperature rising conditions of 20°C/min.

(2) The liquid crystal polyester resin according to (1), which contains 0.1 to 100 ppm of iron atoms.

(3) The liquid crystal polyester resin according to (1) and (2), which is a liquid crystal polyester resin including the following structural unit (I) and satisfying the following formula (a):

$$2 \leq [I] \leq 20 \qquad (a)$$

where [I] represents the content (mol%) of the following structural unit (I) relative to 100 mol% of the total structural units of the liquid crystal polyester resin.

[Chemical Formula 1]

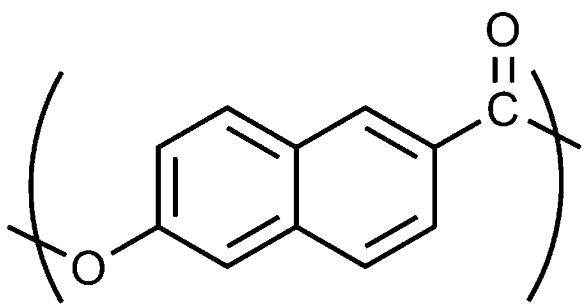

(I)

(4) The liquid crystal polyester resin according to (1) to (3), which is a liquid crystal polyester resin including the following structural units (I) and (II), and satisfying the following formulas (b) and (c):

$$0.01 \leq [II] \leq 5 \qquad (b)$$

$$[II]/[I] < 1 \qquad (c)$$

where [I] and [II] represent the content (mol%) of each of the following structural units (I) and (II) relative to 100 mol% of the total structural units of the liquid crystal polyester resin.

[Chemical Formula 2]

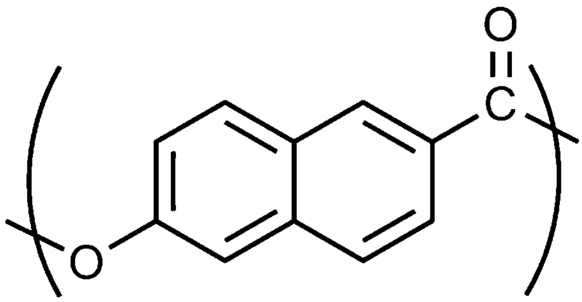

(I)

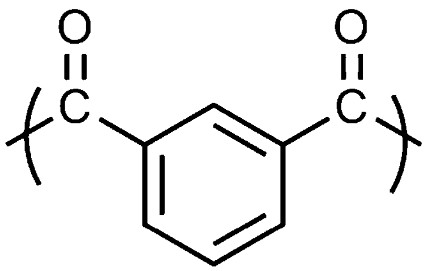

(II)

(5) The liquid crystal polyester resin according to any one of (1) to (4), which is a liquid crystal polyester including the following structural units (II) and (III) and satisfying the following formula (d):

$$0.92 < [III]/([II] + [III]) < 1 \qquad (d)$$

where [11] and [III] represent the content (mol%) of each of the following structural units (II) and (III) relative to 100 mol% of the total structural units of the liquid crystal polyester resin.

[Chemical Formula 3]

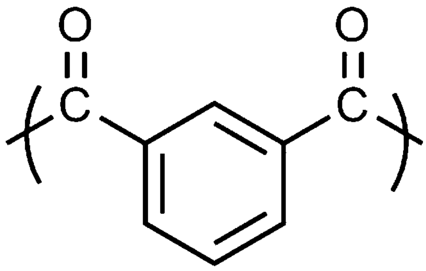

(II)

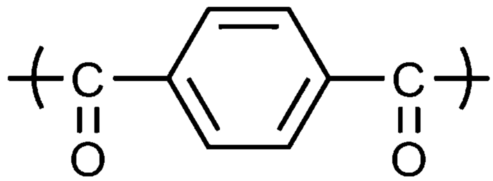

(III)

(6) A method for producing the liquid crystal polyester resin according to any one of (1) to (5), comprising reacting a hydroxycarboxylic acid and/or a diol with acetic anhydride to acetylate at least part of phenolic hydroxyl groups, followed by deacetylation polymerization with a dicarboxylic acid to produce the liquid crystal polyester resin, wherein a ratio of raw material monomers charged satisfies the following formula (e):

$$1 < [\text{aromatic diol}]/[\text{aromatic dicarboxylic acid}] < 1.5 \qquad (e)$$

where [aromatic diol] and [aromatic dicarboxylic acid] represent the amounts (mols) of the aromatic diol and aromatic dicarboxylic acid charged during the production of the liquid crystal polyester resin.

(7) A liquid crystal polyester resin composition comprising 10 to 200 parts by weight of a filler relative to 100 parts by weight of the liquid crystal polyester resin according to any one of (1) to (5).

(8) A molded article comprising the liquid crystal polyester resin according to any one of (1) to (5), or the liquid crystal polyester resin composition according to (7).

(9) The molded article according to (8), which is any one selected from the group consisting of a connector, a relay, a switch, a coil bobbin and an actuator component of a camera module.

(10) A molded article comprising a liquid crystal polyester resin comprising 20 to 80 mol% of a structural unit derived from an aromatic hydroxycarboxylic acid, 10 to 40 mol% of a structural unit derived from an aromatic diol and 10 to 40 mol% of a structural unit derived from an aromatic dicarboxylic acid, relative to 100 mol% of the total structural units of the liquid crystal polyester resin, wherein the total amount of an aromatic carboxylic acid and acetic acid generated when the molded article is maintained at 280°C for 60 minutes under reduced pressure of 13.3 kPa or less is less than 100 ppm.

## Advantageous Effects of Invention

The liquid crystal polyester resin of the present invention exhibits suppressed drooling during injection molding and is excellent in flame retardancy. The liquid crystal polyester resin of the present invention can be suitably used, particularly in molding small electric and electronic components and the like.

## Brief Description of Drawings

FIG. 1 is a schematic diagram of an ampoule glass tube used to measure the amount of phenol gas generated.

FIG. 2 is a schematic diagram of an ampoule glass tube in which liquid crystal polyester resin pellets are sealed under reduced pressure.

Description of Embodiments

The present invention will be described in detail below.

<Liquid Crystal Polyester Resin>

The liquid crystal polyester resin is a polyester which forms an anisotropic molten phase. Examples of such polyester resin include polyesters composed of structural units selected to form an anisotropic molten phase from an oxycarbonyl unit, a dioxy unit, a dicarbonyl unit and the like, which will be mentioned below.

The liquid crystal polyester resin of the present invention is characterized in that components and amounts of gases generated during melting are controlled. That is, the liquid crystal polyester resin of the present invention satisfies the following requirement ($\alpha$):

($\alpha$): when the liquid crystal polyester resin is maintained at a temperature of the melting point Tm + 20°C under reduced pressure of 13.3 kPa or less for 60 minutes, the total amount of an aromatic carboxylic acid and acetic acid generated from the liquid crystal polyester resin is less than 300 ppm.

The melting point Tm of the liquid crystal polyester resin is an endothermic peak temperature determined as follows: after observation of an endothermic peak temperature ($Tm_1$) observed when the liquid crystal polyester resin is heated under temperature rising conditions of 20°C/min from room temperature in differential scanning calorimetry, the liquid crystal polyester resin is maintained at a temperature of $Tm_1$ + 20°C for 5 minutes, and then the liquid crystal polyester resin is once cooled to room temperature under temperature falling conditions of 20°C/min and then heated again under temperature rising conditions of 20°C/min.

The aromatic carboxylic acid mentioned above refers to terephthalic acid, isophthalic acid and benzoic acid. Terephthalic acid and isophthalic acid are used as raw material monomers for liquid crystal polyester resins, but may exist in the liquid crystal polyester resin in an unreacted state. In case where structural units derived from terephthalic acid or isophthalic acid are unevenly distributed near the terminals of the liquid crystal polyester resin, when the liquid crystal polyester resin undergoes heating retention at the melting point Tm or higher, terephthalic acid and isophthalic acid are released by sublimation and decomposition. Benzoic acid is produced in the decomposition process during polymerization and heating retention of aromatic dicarboxylic acids such as terephthalic acid and isophthalic acid, and aromatic hydroxycarboxylic acids such as hydroxybenzoic acid. In particular, isophthalic acid has a bent structure in which carboxylic acid moieties are close to each other, and is therefore bulky and easily decomposed. Regarding acetic acid, when the liquid crystal polyester resin is produced by deacetylation polymerization using acetic anhydride mentioned below, a trace amount of acetic acid may remain in the liquid crystal polyester resin. In the case of the liquid crystal polyester resin with a large number of acetyl terminals, when the liquid crystal polyester resin undergoes heating retention at the melting point Tm or higher, acetic acid is released by decomposition.

In the present invention, it has been found that by controlling the total amount of an aromatic carboxylic acid and acetic acid generated when the liquid crystal polyester resin undergoes heating retention under reduced pressure under the above conditions to less than 300 ppm, drooling during injection molding is suppressed and the flame retardancy is improved. In the liquid crystal polyester resin that releases 300 ppm or more of these components, large amounts of aromatic carboxylic acid and acetic acid, which are acid components, are released during melt-kneading under reduced pressure, or during heating retention such as injection molding, which accelerates the decomposition of the liquid crystal polyester resin, thus making drooling more likely to occur during injection molding and causing deterioration of the flame retardancy of the molded article. The total amount of an aromatic carboxylic acid and acetic acid is preferably 200 ppm or less, more preferably 150 ppm or less, and most preferably 100 ppm or less. Hereinafter, "total amount of an aromatic carboxylic acid and acetic acid generated from the liquid crystal polyester resin when maintained at a temperature of the melting point Tm + 20°C under reduced pressure of 13.3 kPa or less for 60 minutes" may be sometimes abbreviated as "amount of gas generated".

The amount of gas generated of the liquid crystal polyester resin of the present invention is controlled to less than 300 ppm. Although the detailed breakdown is not restricted, from the viewpoints of further suppressing drooling during injection molding and further improving the flame retardancy, the content of terephthalic acid is preferably less than 150 ppm, more preferably 100 ppm or less, and still more preferably 50 ppm or less. The content of isophthalic acid is preferably 75 ppm or less, more preferably 50 ppm or less, and still more preferably 25 ppm or less. The content of benzoic acid is preferably 50 ppm or less, more preferably 25 ppm or less. The content of acetic acid is preferably 100 ppm or less, more preferably 75 ppm or less, and still more preferably 50 ppm or less.

Examples of methods to control the amount of gas generated mentioned above within a suitable range include adjusting the structural units constituting the liquid crystal polyester resin within a preferred range, and/or setting a method of producing the liquid crystal polyester resin to a preferred method. Details are mentioned in the following structural units constituting the liquid crystal polyester resins and "Method for Producing Liquid Crystal Polyester Resin" mentioned below.

The method for calculating the amounts of the aromatic carboxylic acid and acetic acid generated will be

described below. First, 5 g of liquid crystal polyester resin pellets are dried at 150°C for 3 hours using a hot air dryer, and then placed in the heating section (A) of the ampoule glass tube having the shape shown in FIG. 1. Using a vacuum pump (DTC-22, manufactured by ULVAC, Inc.), vacuum suction was applied from the tip of the ampoule glass tube, and while maintaining the system under reduced pressure of 13.3 kPa or less, the section (B) 70 mm from the tip was heated and melted by a gas burner to seal the tube, thus fabricating an analytical ampoule as shown in FIG. 2. Next, the heating section (A) of the analytical ampoule is maintained at a temperature of the melting point of the liquid crystal polyester resin + 20°C for 60 minutes using a ceramic electric tubular furnace (Asahi Rika Seisakusho ARF-30K (temperature controller Model AMF-N)). The gas component generated from the liquid crystal polyester resin pellets by heating is collected at the section (C). The ampoule is removed from the ceramic electric tubular furnace and cooled to room temperature, and then the section (C) is cut out from the ampoule with a file. After weighing the cut-out section (C), the entire gas component aggregated in the section (C) is dissolved in deuterated dimethyl sulfoxide (0.8 g) and a small amount of 1,4-dioxane was added as an internal standard to obtain a solution, which was then subjected to $^1$H-NMR measurement using JNM-ECZ500R manufactured by JEOL Ltd. The section (C) from which the collected components have been removed is washed with acetone, dried in a glass dryer at 60°C for 1 hour, and then weighed again. The total amount of gas generated is calculated from a difference in weight of the section (C) before and after the removal of the collected components. From the $^1$H-NMR spectrum obtained above, the integral value ratio of peaks derived from aromatic carboxylic acids (terephthalic acid, isophthalic acid, benzoic acid), a peak derived from acetic acid, and a peak of the internal standard (1,4-dioxane) is determined. From this and the total amount of gas generated, the amount (ppm) of gas of an aromatic carboxylic acid and acetic acid generated from the liquid crystal polyester resin is calculated.

Here, the degree of vacuum inside the ampoule glass tube is not particularly limited as long as it is 13.3 kPa or less, and may be, for example, a high vacuum state of 0.133 kPa or less.

Next, the structural units constituting the liquid crystal polyester resin will be described.

The liquid crystal polyester resin of the present invention includes, as the oxycarbonyl unit, 20 to 80 mol% of a structural unit derived from an aromatic hydroxycarboxylic acid relative to 100 mol% of the total structural units of the liquid crystal polyester resin. When the content of the structural unit is less than 20 mol%, the flame retardancy deteriorates due to impaired liquid crystallinity. The content of the structural unit is preferably 25 mol% or more, and more preferably 30 mol% or more. Meanwhile, when the content of the structural unit is more than 80 mol%, it becomes difficult to control the amount of gas generated to less than 300 ppm, and thus drooling becomes more likely to occur and the flame retardancy of the molded article also deteriorate. The content of the structural unit is preferably 75 mol% or less, more preferably 70 mol% or less, and still more preferably 55 mol% or less.

The liquid crystal polyester resin of the present invention preferably includes, as the structural unit derived from an aromatic hydroxycarboxylic acid, 2 to 20 mol% of the structural unit (I). The structural unit (I) is a structural unit derived from 6-hydroxy-2-naphthoic acid. Since the structural unit (I) has a naphthalene structure and is bulky, and is inhibited from molecular motion, it is possible to inhibit the decomposition of molecular chains in the vicinity of the structural unit (I) during heating retention. The structural unit (I) reacts well with the structural unit (IV) mentioned below, thus making it possible to further suppress the generation of benzoic acid gas due to the decomposition of the structural unit (IV). These effects make it easy to control the amount of gas generated to less than 300 ppm. The structural unit (I) is highly aromatic and promotes char formation when exposed to flame, so that the inclusion of the structural unit (I) can also enhance the flame retardancy. The content of the structural unit (I) is preferably 2.5 mol% or more, and more preferably 3 mol% or more. From the viewpoints of the flame retardancy and suppression of drooling, the content is preferably 15 mol% or less, and more preferably 10 mol% or less.

[Chemical Formula 4]

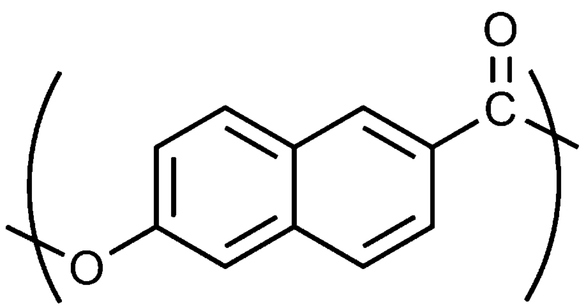

(I)

From the viewpoints of improving the liquid crystallinity and excellent flame retardancy, the liquid crystal polyester resin of the present invention preferably includes, as the structural unit derived from an aromatic hydroxycarboxylic acid, 15 to 75 mol% of the structural unit (IV). The content of the structural unit (IV) is more preferably 25 mol% or more, and still

more preferably 35 mol% or more. From the viewpoint of making it easy to control the amount of gas generated to less than 300 ppm, the content is preferably 65 mol% or less, and more preferably 55 mol% or less.

[Chemical Formula 5]

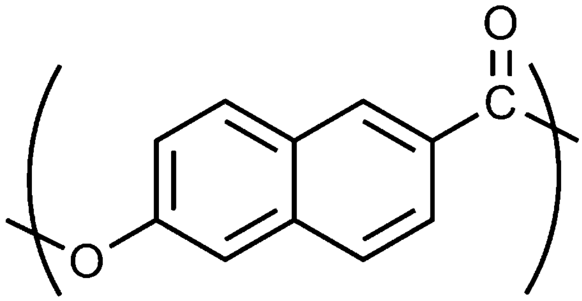

(I)

The liquid crystal polyester resin of the present invention may include, as the oxycarbonyl unit, structural units other than the structural units (I) and (IV). It is possible to use, as specific examples of other oxycarbonyl unit, a structural unit derived from m-hydroxybenzoic acid.

The liquid crystal polyester resin of the present invention includes, as the dicarbonyl unit, 10 to 40 mol% of a structural unit derived from an aromatic dicarboxylic acid relative to 100 mol% of the total structural units of the liquid crystal polyester resin. When the content of the structural unit is less than 10 mol%, the flame retardancy deteriorates due to impaired liquid crystallinity. The content of the structural unit is preferably 15 mol% or more, and more preferably 20 mol% or more. Meanwhile, when the content of the structural unit is more than 40 mol%, it becomes difficult to control the amount of gas generated to less than 300 ppm, and thus drooling becomes more likely to occur and the flame retardancy of the molded article also deteriorate. The content of the structural unit is preferably 35 mol% or less, and more preferably 30 mol% or less. Examples of the structural unit derived from an aromatic dicarboxylic acid include structural units derived from terephthalic acid, isophthalic acid, 2,6-naphthalenedicarboxylic acid, 4,4'-diphenyldicarboxylic acid, 3,3'-diphenyldicarboxylic acid, 2,2'-diphenyldicarboxylic acid, 1,2-bis(phenoxy)ethane-4,4'-dicarboxylic acid, 1,2-bis(2-chlorophenoxy)ethane-4,4'-dicarboxylic acid, 4,4'-diphenyletherdicarboxylic acid and the like. From the viewpoints of excellent availability and excellent moldable temperature range, it is preferable to use a structural unit selected from structural units derived from terephthalic acid and isophthalic acid.

From the viewpoints of making it easy to control the amount of gas generated to less than 300 ppm, being excellent in flame retardancy and capable of suppressing drooling, the liquid crystal polyester resin of the present invention preferably includes, as the structural unit derived from an aromatic dicarboxylic acid, 0.01 mol% or more, more preferably 0.05 mol% or more, and still more preferably 0.1 mol% or more of the structural unit (II), relative to 100 mol% of the total structural units of the liquid crystal polyester resin. The structural unit (II) is a structural unit derived from isophthalic acid. Meanwhile, from the viewpoint of making it easier to control of the amount of gas generated to less than 300 ppm, the structural unit (II) is preferably included in an amount of 5 mol% or less, more preferably 3 mol% or less, and still more preferably 1.5 mol% or less. Since the structural unit (II) has a bent structure, decomposition and deterioration are likely to occur from the site where the structural unit is introduced due to heating retention, thus making it possible to enhance the effects of the present invention by setting the content within the above preferred range.

[Chemical Formula 6]

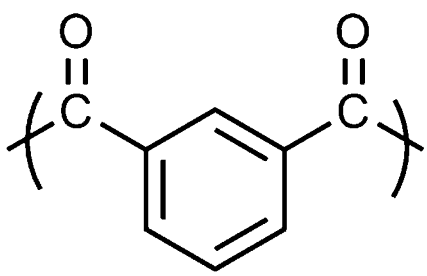

(II)

From the viewpoints of making it easy to control the amount of gas generated to less than 300 ppm, being excellent in flame retardancy and capable of suppressing drooling, the liquid crystal polyester resin of the present invention preferably includes, as the structural unit derived from an aromatic dicarboxylic acid, 5 mol% or more , more preferably 10

mol% or more, and still more preferably 15 mol% or more of the structural unit (III), relative to 100 mol% of the total structural units of the liquid crystal polyester resin. The structural unit (III) is a structural unit derived from terephthalic acid. Meanwhile, from the viewpoint of making it easier to control of the amount of gas generated to less than 300 ppm, the structural unit (III) is preferably included in an amount of 35 mol% or less, more preferably 30 mol% or less, and still more preferably 25 mol% or less.

[Chemical Formula 7]

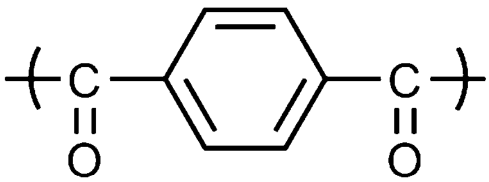

(III)

The liquid crystal polyester resin of the present invention may include, as the dicarbonyl unit, structural units other than the structural units (II) and (III). It is possible to use, as the dicarbonyl unit, structural units derived from aliphatic dicarboxylic acids such as adipic acid, azelaic acid, sebacic acid, dodecanedioic acid and hexahydroterephthalic acid; and structural units derived from alicyclic dicarboxylic acids such as 1,4-cyclohexanedicarboxylic acid and 1,3-cyclohexanedicarboxylic acid as long as the effects of the present invention are not impaired.

Regarding the liquid crystal polyester resin of the present invention, from the viewpoints of making it easy to control the amount of gas generated to less than 300 ppm, being excellent in flame retardancy and capable of suppressing drooling, a ratio ([II]/[I]) of the content of the structural unit (I) to the content of the structural unit (II) relative to 100 mol% of the total structural units of the liquid crystal polyester resin is preferably less than 1. By setting the content within this range, the structural unit (II) is sufficiently incorporated into the polymer chain, thus making it possible to more control the amount of gas generated. The ratio [II]/[I] is more preferably 0.9 or less. Meanwhile, the lower limit of the ratio [II]/[I] is not particularly limited, and may be 0.005 or more. From the viewpoints of making it easy to control the amount of gas generated to less than 300 ppm, being excellent in flame retardancy and suppressing drooling, the ratio [II]/[I] is preferably 0.01 or more, and more preferably 0.05 or more.

[I] and [II] respectively represent the contents (mol%) of the structural units (I) and (II) relative to 100 mol% of the total structural units of the liquid crystal polyester resin.

In the liquid crystal polyester resin of the present invention, from the viewpoints of making it easy to control the amount of gas generated to less than 300 ppm, being excellent in flame retardancy and capable of suppressing drooling, it is preferable that the relationship between the contents of the structural units (II) and (III) relative to 100 mol% of the total structural units of the liquid crystal polyester resin satisfies the following formula (d).

$$0.92 < [III]/([II] + [III]) < 1 \qquad (d)$$

where [II] and [III] respectively represent the contents (mol%) of the structural units (II) and (III) relative to 100 mol% of the total structural units of the liquid crystal polyester resin.

Since the structural unit (II) is gasified and released during heating retention at a higher rate than other structural units, it becomes easy to control the amount of gas generated to less than 300 ppm by controlling within the above range, thus making it possible to be excellent in flame retardancy and to suppress drooling. The ratio [III]/([II] + [III]) is more preferably 0.94 or more.

The liquid crystal polyester resin of the present invention includes, as the dioxy unit, 10 to 40 mol% of a structural unit derived from an aromatic diol relative to 100 mol% of the total structural units of the liquid crystal polyester resin. When the content of the structural unit is less than 10 mol%, it becomes difficult to control the amount of gas generated to less than 300 ppm, and thus drooling becomes more likely to occur and the flame retardancy of the molded article also deteriorate. The content of the structural unit is preferably 15 mol% or more, and more preferably 20 mol% or more. Meanwhile, when the content of the structural unit is more than 40 mol%, the flame retardancy deteriorates due to impaired liquid crystallinity. The content of the structural unit is preferably 35 mol% or less, and more preferably 30 mol% or less. Examples of the structural unit derived from an aromatic diol include structural units derived from 4,4'-dihydroxybiphenyl, hydroquinone, resorcinol, t-butylhydroquinone, phenylhydroquinone, chlorohydroquinone, 2,6-dihydroxynaphthalene, 2,7-dihydroxynaphthalene, 3,4'-dihydroxybiphenyl, 2,2-bis(4-hydroxyphenyl)propane, 4,4'-dihydroxydiphenyl ether, 4,4'-dihydroxydiphenyl sulfone, 4,4'-dihydroxydiphenyl sulfide, 4,4'-dihydroxybenzophenone and the like.

From the viewpoints of making it easy to control the amount of gas generated to less than 300 ppm, being excellent in flame retardancy and capable of suppressing drooling, the liquid crystal polyester resin of the present invention preferably includes, as the structural unit derived from an aromatic diol, 2 mol% or more, more preferably 5 mol% or more,

and still more preferably 8 mol% or more of the structural unit (V), relative to 100 mol% of the total structural units of the liquid crystal polyester resin. The structural unit (V) is a structural unit derived from hydroquinone. Meanwhile, from the viewpoint of making it easier to control of the amount of gas generated to less than 300 ppm, the structural unit (V) is preferably included in an amount of 20 mol% or less, more preferably 18 mol% or less, and still more preferably 16 mol% or less.

[Chemical Formula 8]

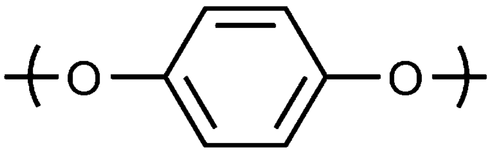

(V)

From the viewpoints of making it easy to control the amount of gas generated to less than 300 ppm, being excellent in flame retardancy and capable of suppressing drooling, the liquid crystal polyester resin of the present invention preferably includes, as the structural unit derived from an aromatic diol, 2 mol% or more, more preferably 4 mol% or more, and still more preferably 6 mol% or more of the structural unit (VI), relative to 100 mol% of the total structural units of the liquid crystal polyester resin. The structural unit (VI) is a structural unit derived from 4,4'-dihydroxybiphenyl. Meanwhile, from the viewpoint of making it easier to control of the amount of gas generated to less than 300 ppm, the structural unit (VI) is preferably included in an amount of 20 mol% or less, more preferably 17 mol% or less, and still more preferably 14 mol% or less.

[Chemical Formula 9]

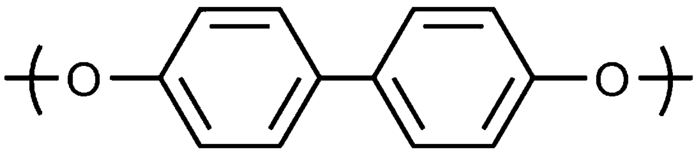

(VI)

The liquid crystal polyester resin of the present invention may include, as the dioxy unit, structural units other than the above structural units (V) and (VI). It is possible to use, as the dioxy unit, structural units derived from aliphatic diols such as ethylene glycol, propylene glycol, 1,4-butanediol, 1,6-hexanediol and neopentyl glycol; and structural units derived from alicyclic diols such as 1,4-cyclohexanediol and 1,4-cyclohexanedimethanol as long as the effects of the present invention are not impaired.

The liquid crystal polyester resin may include, in addition to the above structural units (I) to (VI), structural units derived from p-aminobenzoic acid, p-aminophenol and the like as long as the effects of the present invention are not impaired.

When the liquid crystal polyester resin of the present invention includes all the structural units (I) to (VI) within the above range, the above structural units (II) and (II) are sufficiently incorporated into the polymer chain, thus making it easy to control the amount of gas generation to less than 300 ppm, being excellent in flame retardancy and capable of suppressing drooling, which is preferable. From the viewpoint of not impairing the effects of the present invention, the total amount of the structural units (I) to (VI) is preferably 99 mol% or more, more preferably 99.5 mol% or more, and still more preferably 100 mol%.

For the liquid crystal polyester resin, structural units derived from p-aminobenzoic acid, p-aminophenol and the like, in addition to the above structural units (I) to (VI), can be used as long as the effects of the present invention is not impaired.

The monomer as a raw material constituting each of the above structural units is not particularly limited as long as it has a structure capable of forming each structural unit. It is possible to use a derivative of such a monomer in which a hydroxyl group is acylated, a carboxylic acid derivative in which a carboxyl group is converted into an ester, an acid halide, or an acid anhydride, or the like.

The calculation method of the content of each structural unit of the liquid crystal polyester resin will be shown below. First, the content of each structural unit can be obtained by pulverizing the liquid crystal polyester resin, adding tetramethylammonium hydroxide, and performing pyrolysis GC/MS measurement using GCMS-QP5050A manufactured by Shimadzu Corporation. The content of the structural unit not detected or below the detection limit is calculated as 0 mol%.

The liquid crystal polyester resin of the present invention preferably contains iron atoms in an amount of 0.1 to 100 ppm. Since iron atoms can form a complex with carboxylic acid moieties such as acetic acid, the liquid crystal polyester resin can further reduce the amount of gas generated by containing iron atoms, and is excellent in flame retardancy and can suppress drooling. By adding iron atoms during polymerization of the liquid crystal polyester resin, iron atoms act as a catalyst and the reactivity of the monomers that provide the structural units (I) to (VI) is suitably controlled, and the proportion of unreacted materials is reduced, thus making it easy to control the amount of gas generated to less than 300 ppm. The content used here is on a weight basis of iron atoms in the liquid crystal polyester resin. The iron atom content is more preferably 50 ppm or less, still more preferably 30 ppm or less, and most preferably 10 ppm or less.

Examples of the method for incorporating iron atoms into the liquid crystal polyester resin include, but are not particularly limited to, the following method.

1. A liquid crystal polyester resin is produced by the below-mentioned <Method for Producing Liquid Crystal Polyester Resin> using a monomer raw material containing a trace amount of iron atoms.
2. A trace amount of a compound containing iron atoms is added during production by the method mentioned in the below-mentioned <Method for Producing Liquid Crystal Polyester Resin>. Examples of the compound containing iron atoms include, but are not particularly limited to, iron powder, iron oxide, iron hydroxide, iron chloride, iron sulfide, iron sulfate and iron acetate.
3. As the polymerization apparatus, a polymerization apparatus made of stainless steel (SUS), whose main component is iron, is used.

In the above methods, the method mentioned in 1. is preferable from the viewpoint of effectively exerting the above-mentioned effects of iron atoms since iron atoms are well dispersed in the liquid crystal polyester resin.

In the present invention, the content of iron atoms in the liquid crystal polyester resin is the total amount of iron atoms contained in compounds containing iron atoms as impurities (metallic iron, iron oxide, etc.) and iron atoms contained in the polymer skeleton or coordinated to the terminals. The iron atom content is a value measured as follows: sulfuric acid is added dropwise to the liquid crystal polyester resin to incinerate the resin at 500°C, and the ash thus obtained is dissolved in an aqueous 0.1 N nitric acid solution, followed by atomic absorption spectrometry using an optical emission spectrometer.

The melting point (Tm) of the liquid crystal polyester resin is preferably 280°C or higher, more preferably 300°C or higher, and still more preferably 320°C or higher, from the viewpoint of the heat resistance. Meanwhile, from the viewpoint of the processability, the melting point (Tm) of the liquid crystal polyester resin is preferably 370°C or lower, more preferably 360°C or lower, and still more preferably 350°C or lower.

The melt viscosity of the liquid crystal polyester resin is preferably 3 Pa·s or more, more preferably 5 Pa·s or more, and still more preferably 7 Pa·s or more, from the viewpoint of the heat resistance. Meanwhile, from the viewpoint of the fluidity, the melt viscosity of the liquid crystal polyester resin is preferably 50 Pa·s or less, more preferably 30 Pa·s or less, and still more preferably 20 Pa·s or less.

The melt viscosity is the value measured by a Koka-type flow tester at a temperature of the melting point (Tm) of the liquid crystal polyester resin + 20°C, under the conditions of a shear rate of 1,000/sec.

<Method for Producing Liquid Crystal Polyester Resin>

Examples of the method for producing the liquid crystal polyester resin of the present invention include a method in which monomers providing structural units (I) to (VI) are obtained by copolymerizing in contents within the above ranges, and a method in which two or more types of liquid crystal polyester resins obtained by copolymerizing the structural units (I) to (VI) in contents outside the above ranges are blended so that the contents of the structural units (I) to (VI) fall within the above ranges. From the viewpoints of making it easy to control the amount of gas generated to less than 300 ppm, being excellent in flame retardancy and capable of suppressing drooling without taking over the properties of the liquid crystal polyester resin before blending, a method in which monomers providing structural units (I) to (VI) are obtained by copolymerizing in contents within the above ranges is preferred.

The method for producing a liquid crystal polyester resin of the present invention is not particularly limited, and the liquid crystal polyester resin can be produced according to a known polycondensation method of polyester. From the viewpoint capable of controlling the amount of gas generated within a preferred range, taking a liquid crystal polyester resin comprising a structural unit derived from p-hydroxybenzoic acid, a structural unit derived from 6-hydroxy-2-naphthoic acid, a structural unit derived from 4,4'-dihydroxybiphenyl, a structural unit derived from hydroquinone, and structural units derived from terephthalic acid and isophthalic acid, as an example, preferred is a method in which p-hydroxybenzoic acid, 6-hydroxy-2-naphthoic acid, 4,4'-dihydroxybiphenyl, hydroquinone, terephthalic acid and isophthalic acid are reacted with acetic anhydride to acetylate a phenolic hydroxyl group, followed by deacetylation polymerization to produce a liquid crystal polyester resin.

Furthermore, in the above-mentioned production method due to deacetylation polymerization, by satisfying any one of the following requirements 1 to 3, it is possible to control the amount of gas generated within a more preferred range.

1. A method for producing a liquid crystal polyester resin, comprising reacting a hydroxycarboxylic acid and/or a diol with acetic anhydride to acetylate at least part of phenolic hydroxyl groups, followed by deacetylation polymerization with a dicarboxylic acid, wherein each charge ratio of raw material monomers satisfies the following formula (e):

$$1 < [\text{aromatic diol}]/[\text{aromatic dicarboxylic acid}] < 1.5 \qquad (e)$$

where [aromatic diol] and [aromatic dicarboxylic acid] represent the amounts (mols) of the aromatic diol and the aromatic dicarboxylic acid charged during the production of the liquid crystal polyester resin.
2. A method for producing a liquid crystal polyester, comprising using an aromatic hydroxycarboxylic acid, an aromatic diol and an aromatic dicarboxylic acid as raw material monomers, and acetylating hydroxyl groups of the aromatic diol with acetic anhydride, followed by deacetylation polymerization, wherein the average temperature rising rate from a polymerization temperature from 230°C to 250°C is controlled to 0.4°C/min or less.
3. A method for producing a liquid crystal polyester, comprising using an aromatic hydroxycarboxylic acid, an aromatic diol and an aromatic dicarboxylic acid as raw material monomers, and acetylating hydroxyl groups of the aromatic diol with acetic anhydride, followed by deacetylation polymerization, wherein the reaction time at the melting point Tm of the liquid crystal polyester resin or higher is controlled to 120 to 170 minutes.

Regarding the above requirement 1, by charging the aromatic diol monomer in excess of the aromatic dicarboxylic acid monomer, the reaction rate of the aromatic dicarboxylic acid monomer, which has low reactivity, is improved, and in the liquid crystal polyester resin, the structural unit derived from the aromatic dicarboxylic acid monomer can be unevenly distributed in the chain rather than at the polymer terminal. This makes it possible to prevent gas derived from the aromatic dicarboxylic acid from being released from the terminals during heating and melting, thus makes it easy to control the gas components generated. The aromatic diol has high sublimability, and depending on the polymerization equipment and conditions, the aromatic diol may sublimate and released outside the system during polymerization. Therefore, by adding an excess amount of the aromatic diol, the amount released can be compensated for, and the structural unit derived from the aromatic dicarboxylic acid monomer can be prevented from being unevenly distributed at the ends of the liquid crystal polyester resin, thus making it easier to control the gas components generated. The value of [aromatic diol]/[aromatic dicarboxylic acid] is more preferably 1.01 or more, and still more preferably 1.03 or more. From the viewpoint of the polymerizability, the ratio is more preferably 1.30 or less, and still more preferably 1.20 or less. When an excess amount of the aromatic diol is charged within the above-mentioned preferred range, the excess amount is released outside the system as the reaction proceeds. When the reaction is carried out by the methods mentioned in 2 and 3, the aromatic diol is released more efficiently from the system, so that the aromatic diol hardly remains in an unreacted state in the liquid crystal polyester resin. When a plurality of monomers, such as hydroquinone and 4,4'-dihydroxybiphenyl, are used in combination as the aromatic diol, it is possible to arbitrarily select which monomer is charged in excess, but it is preferable to charge all of the aromatic diols in excess from the viewpoint of making it easy to control the amount of gas generated.

Regarding the above requirement 2, at the polymerization temperature of 230°C to 250°C, the reactivity of the acetylated aromatic diol monomer increases, while the rate at which the acetylated aromatic diol monomer is released outside the system due to sublimation also increases. In this case, by setting the average temperature rising rate from 230°C to 250°C at 0.4°C/min or less, the acetylated aromatic diol monomer can be sufficiently reacted while suppressing release outside the system due to sublimation, thus preventing the structural units derived from the aromatic dicarboxylic acid monomer from being unevenly distributed at the terminals of the liquid crystal polyester resin, and making it easier to control the gas components generated. The average temperature rising rate from 230°C to 250°C is more preferably 0.3°C/min or less, and still more preferably 0.2°C/min or less.

Regarding the above requirement 3, by controlling the reaction time at the melting point or higher to 120 to 170 minutes, it is possible to remove unnecessary acetic acid from the polymerization system and promote the elimination of acetic acid from the acetyl terminal of the liquid crystal polyester resin, and therefore the acetic acid component is reduced in the liquid crystal polyester resin obtained after polymerization, thus making it easy to control the gas components generated. Since the thermal decomposition of the liquid crystal polyester resin during polymerization can be suppressed, an increase in terminals and an increase in gas components due to the inclusion of decomposition products can also be suppressed. The reaction time at the melting point or higher is more preferably 130 minutes or more. Also, 160 minutes or less is preferable.

By satisfying two or more of the above requirements 1 to 3, it becomes easier to control the amount of gas generated to less than 300 ppm.

<Filler>

The liquid crystal polyester resin of the present invention may be a liquid crystal polyester resin composition including a filler to impart mechanical strength and other properties to the liquid crystal polyester resin. The filler used in the present invention is not particularly limited, and examples thereof include fibrous fillers, whisker-like fillers, plate-like fillers, powdery fillers, and granular fillers. Specific examples of fibrous fillers or whisker-like fillers include glass fibers, PAN-based or pitch-based carbon fibers; metal fibers such as stainless steel fibers, aluminum fibers and brass fibers; organic fibers such as aromatic polyamide fibers and liquid crystal polyester fibers; gypsum fibers, ceramic fibers, asbestos fibers, zirconia fibers, alumina fibers, silica fibers, titanium oxide fibers, silicon carbide fibers, rock wools, potassium titanate whiskers, barium titanate whiskers, aluminum borate whiskers, silicon nitride whiskers and acicular titanium oxides. Examples of plate-like fillers include mica, talc, kaolin, glass flakes, clay, molybdenum disulfide, and wollastonite. Examples of powdery fillers or granular fillers include silica, glass beads, titanium oxide, zinc oxide, calcium polyphosphate, and graphite. The surface of the above fillers to be used in the present invention may be treated with a surface treatment agent such as a known coupling agent (for example, a silane-based coupling agent, a titanate-based coupling agent, etc.). Two or more kinds of the above fillers to be used in the present invention may be used in combination.

Of the fillers mentioned above, it is preferable to use glass fiber, in view of its excellent mechanical strength, particularly tensile strength and bending strength, heat resistance and dimensional stability. The type of glass fiber is not limited as long as it is generally used for reinforcing resins, and examples thereof include chopped strands of long fiber type or short fiber type, and milled fibers. It is preferable to use plate-like fillers because of their excellent thin-wall fluidity.

The surface of the fillers may be treated with surface treatment agents such as known coupling agents (e.g., a silane-based coupling agent, a titanate-based coupling agent, etc.). The glass fibers may also be coated or bundled with thermoplastic resins such as an ethylene/vinyl acetate copolymer, or thermosetting resins such as an epoxy resin.

It is possible to further mix, as additives, common additives selected from antioxidants, heat stabilizers (e.g., hindered phenol, hydroquinone, phosphite, thioethers and substitutes thereof), UV absorbers (e.g., resorcinol, salicylate), anti-colorants such as phosphites and hypophosphites, lubricants and mold release agents (such as montanic acid and metal salts thereof, esters thereof, half esters thereof, stearyl alcohols, stearamides and polyethylene waxes), colorants including dyes or pigments, carbon black as conductive agents or colorants, crystal nucleating agents, plasticizers, flame retardants (bromine-based flame retardants, phosphorus-based flame retardants, red phosphorus, silicone-based flame retardants, etc.), flame retardant aids and antistatic agents, into the liquid crystal polyester resin composition of the present invention as long as the effects of the present invention are not impaired.

In the liquid crystal polyester resin composition of the present invention, the content of the filler is preferably 10 to 200 parts by weight relative to 100 parts by weight of the liquid crystal polyester resin. When the content of the filler is 10 parts by weight or more, the mechanical strength of the molded article can be improved. The content of the filler is preferably 15 parts by weight or more, and more preferably 20 parts by weight or more. Meanwhile, the content of the filler of 200 parts by weight or less is preferable because a liquid crystal polyester resin composition can be obtained which has excellent moldability and thin-wall fluidity and can be easily injection molded into small thin-wall molded articles. The content of the filler is preferably 150 parts by weight or less, and more preferably 100 parts by weight or less.

It is possible to use, as the method of mixing the above-mentioned fillers and additives, for example, a dry blending method in which a filler and other solid additives are mixed with a liquid crystal polyester resin, a solution mixing method in which a filler and other liquid additives are mixed in a liquid crystal polyester resin, a method in which a filler and other additives are added during polymerization of a liquid crystal polyester resin, a method in which a filler and other additives are melt-kneaded with a liquid crystal polyester resin, and the like. Of these, a method of melt-kneading is preferred.

A known method can be used for melt-kneading. Examples thereof include a Banbury mixer, a rubber roll machine, a kneader, and a single-screw or twin-screw extruder. Of these, a twin-screw extruder is preferable. The melt-kneading temperature is preferably the melting point of the liquid crystal polyester resin or higher and the melting point of + 50°C or lower.

Examples of the kneading method include 1) a method in which a liquid crystal polyester resin, a filler and other additives are charged at once from a feeder and then kneaded (batch kneading method), 2) a method in which a liquid crystal polyester resin and other additives are charged from the side feeder, and after kneading, a filler and other additives are added from the side feeder, followed by kneading (side feeding method), 3) a method in which a liquid crystal polyester resin composition (master pellet) containing a liquid crystal polyester resin and other additives in high concentration is fabricated and then the master pellet is kneaded with the liquid crystal polyester resin and a filler so that the additives has a specified concentration (master pellet method) and the like.

<Molded Article>

The liquid crystal polyester resin and the liquid crystal polyester resin composition of the present invention can be

formed into a molded article having excellent surface appearance (color tone), mechanical properties and heat resistance by conventional molding methods such as injection molding, extrusion molding, press molding, or solution casting film forming. Examples of the molded article as used herein include injection-molded articles, extrusion-molded articles, press-molded articles, sheets, pipes, various films such as unstretched films, uniaxially stretched films and biaxially stretched films, and various fibers such as unstretched yarns and super-stretched yarns. Injection molded article is preferred, especially from the viewpoint of the processability. For melt-molding, it is preferable to melt-mold the liquid crystal polyester resin composition at 370°C or less, more preferably at 360°C or less, from the viewpoints of suppressing deterioration of the liquid crystal polyester resin and the liquid crystal polyester resin composition, suppressing the amounts of the aromatic carboxylic acid and acetic acid generated when the molded article mentioned below are maintained at 280°C, thereby improving the flame retardancy, and improving mechanical strength.

The molded article of the present invention is a molded article comprising a liquid crystal polyester resin comprising 20 to 80 mol% of a structural unit derived from an aromatic hydroxycarboxylic acid, 10 to 40 mol% of a structural unit derived from an aromatic diol and 10 to 40 mol% of a structural unit derived from an aromatic dicarboxylic acid, relative to 100 mol% of the total structural units of the liquid crystal polyester resin, wherein the total amount of an aromatic carboxylic acid and acetic acid generated when the molded article is maintained at 280°C for 60 minutes under reduced pressure of 13.3 kPa or less is less than 100 ppm. The temperature of 280°C is close to the temperature at which the molded article is subjected to secondary processing such as reflow treatment, and to the temperature in operating environment. A small amount of gas generated at 280°C indicates that acid component gas is unlikely to be released during secondary processing or use, and that the material has excellent processability and is suitable for long-term use.

As mentioned above in the item of the liquid crystal polyester resin, by using a liquid crystal polyester resin in which the amount of gas generated, i.e., the amounts of the aromatic carboxylic acid and acetic acid generated when maintained at the melting point + 20°C for 60 minutes under reduced pressure of 13.3 kPa or less, are 300 ppm or less, less gas is generated during melt processing such as melt kneading or injection molding, the amounts of gas components remaining in the molded article are reduced, and the amounts of the aromatic carboxylic acid and acetic acid gas generated when maintained at 280°C can be reduced to 100 ppm or less. Such molded article has excellent processability such as reflowability and is suitable for long-term use, and also has excellent flame retardancy.

Meanwhile, when using a liquid crystal polyester resin in which the amount of gas generated is 300 ppm or more, a large amount of gas is generated during melt processing such as melt kneading or injection molding, and the amount of gas components remaining in the molded article increases. When the molded article is maintained at 280°C, the amounts of the aromatic carboxylic acid and acetic acid gas generated exceeds 100 ppm, leading to deterioration of the processability such as reflow and deterioration of the flame retardancy.

The amounts of the aromatic carboxylic acid and acetic acid generated when the molded article is maintained at 280°C are more preferably 80 ppm or less, and most preferably 50 ppm or less, from the viewpoint of excellent flame retardancy.

The amounts of the aromatic carboxylic acid and acetic acid generated from the molded article are measured in the same manner as in the item of Liquid Crystal Polyester Resin, except that the temperature of the ceramic electric tubular furnace is set at 280°C. In the case of a liquid crystal polyester resin composition including a filler, the amount of gas is calculated by converting it into the amount of gas generated from the liquid crystal polyester resin excluding the filler.

The liquid crystal polyester resin of the present invention and the molded article obtained by molding the liquid crystal polyester resin composition can be preferably used as electric and electronic components. Examples of the electric and electronic component include flexible printed circuit boards, circuit boards for laminates, printed wiring boards, and three-dimensional circuit boards used for antennas of mobile communications and electronic devices such as personal computers, devices with built-in GPS, cell phones, millimeter wave and quasi-millimeter wave radars such as anticollision radars, tablets and smartphones; lamp reflectors and lamp socket for LED, or the like, communication base station small cell and microcell components for mobile communication terminals, antenna covers, housings, sensors, actuator components of camera modules, connector, relay cases and bases, switches, coil bobbins, and capacitors. Of these, it is useful for connectors, relays, switches, coil bobbins, and actuator components of camera modules that have thin-walled parts of complex shape, from the viewpoint of being moldable at a wide range of molding temperatures, and having low thickness dependency of fluidity.

## Examples

The present invention will be described below by way of Examples, but the present invention is not limited to Examples. In Examples, the composition and evaluation of properties of the liquid crystal polyester resin were measured by the following methods.

(1) Composition Analysis of Liquid Crystal Polyester Resin

To 0.1 mg of a pulverized liquid crystal polyester resin, 2 μL of a 25% methanol solution of tetramethylammonium hydroxide was added, and pyrolysis GC/MS measurement was performed using GCMS-QP5050A manufactured by Shimadzu Corporation to determine the content of each structural unit in the liquid crystal polyester resin.

(2) Measurement of Melting Point (Tm) of Liquid Crystal Polyester Resin

After observation of an endothermic peak temperature ($Tm_1$) observed when the liquid crystal polyester resin is heated under temperature rising conditions of 20°C/min from room temperature using a differential scanning calorimeter DSC-7 (manufactured by PerkinElmer, Inc.), the liquid crystal polyester resin is maintained at a temperature of $Tm_1$ + 20°C for 5 minutes, followed by observation of an endothermic peak temperature observed when the temperature is once fallen to room temperature under temperature falling conditions of 20°C/min and then raised again under temperature rising conditions of 20°C/min, and the endothermic peak temperature thus obtained was defined as the melting point (Tm).

(3) Melt Viscosity of Liquid Crystal Polyester Resin

Using a Koka-type flow tester CFT-500D (orifice: 0.5φ × 10 mm) (manufactured by Shimadzu Corporation), the melt viscosity of the liquid crystal polyester resin was measured under conditions: Tm + 20°C and shear rate of 1,000/s.

(4) Total Amount of Aromatic Carboxylic Acid and Acetic Acid generated from Liquid Crystal Polyester Resin

A liquid crystal polyester resin (5 g) was placed in the heating section (A) of an ampoule glass tube having the shape shown in FIG. 1. Using a vacuum pump (DTC-22, manufactured by ULVAC, Inc.), vacuum suction was applied from the tip of the ampoule glass tube, and while maintaining the system under reduced pressure of 13.3 kPa or less, the section (B) 70 mm from the tip was heated and melted by a gas burner to seal the tube, thus fabricating an analytical ampoule (FIG. 2). The heating section (A) of the analytical ampoule was maintained at a temperature of the melting point of the liquid crystal polyester resin + 20°C for 60 minutes using a ceramic electric tubular furnace (Asahi Rika Seisakusho ARF-30K (temperature controller AMF-N model)), and then the generated gas was collected at the section (C). The ampoule was removed from the ceramic electric tubular furnace and cooled to room temperature, and then the section (C) is cut out from the ampoule with a file. After weighing the cut-out section (C), the entire gas component aggregated in the section (C) was dissolved in deuterated dimethyl sulfoxide (0.8 g) and a small amount of 1,4-dioxane was added as an internal standard to obtain a solution, which was then subjected to $^1$H-NMR measurement using JNM-ECZ500R manufactured by JEOL Ltd. The section (C) from which the collected components have been removed was washed with acetone, dried in a glass dryer at 60°C for 1 hour, and then weighed again. The total amount of gas generated is calculated from a difference in weight of the section (C) before and after the removal of the collected components. From the $^1$H-NMR spectrum obtained above, the integral ratio of peaks derived from aromatic carboxylic acids (terephthalic acid, isophthalic acid, benzoic acid), a peak derived from acetic acid, and a peak of the internal standard (1,4-dioxane) was determined. From this and the total amount of gas generated, the amount (ppm) of the aromatic carboxylic acid and acetic acid gas generated from the liquid crystal polyester resin was calculated. This total amount is indicated as "amount of gas generated" in Table 2.

(5) Amount of Fe Atoms

A liquid crystal polyester resin (15 g) was placed in a platinum crucible and, after dropwise addition of sulfuric acid, the resin was incinerated in an electric furnace at 500°C. The ash thus obtained was dissolved in an aqueous 0.1 N nitric acid solution to obtain a dilute nitric acid acidic solution, which was used as a sample. Measurement was carried out by atomic absorption spectrometry using an optical emission spectrometer SPS4000 (manufactured by SII Nano Technology Inc.), and the content of iron atoms was calculated from the peak intensity of the peak (238.204 nm) derived from iron atoms. In Table 2, the iron content in the liquid crystal polyester resin is indicated as "iron content (ppm)." The iron content in the raw material monomer mentioned below was also measured in the same manner. When the iron content is less than 0.1 ppm, it is indicated as "not contained".

(6) Evaluation of Drooling Properties

The liquid crystal polyester resin or liquid crystal polyester resin composition was dried at 150°C for 3 hours using a hot air dryer, and then supplied to a TR30EHA injection molding machine (manufactured by Sodick Co., Ltd.) having a nozzle tip diameter of 1.4 mm. Under high temperature and high speed injection conditions, that is, the cylinder temperature was set at the melting point of the liquid crystal polyester resin + 30°C (in the case of a liquid crystal

polyester resin composition including a filler, the melting point + 40°C), the mold temperature was set at 90°C, and 50 shots of continuous molding were carried out using a mold capable of molding a molded article of 5.0 mm wide ×80 mm long × 0.2 mm thick by adjusting the molding pressure so that the length was 80 mm and applying a holding pressure of 45 MPa for 0.5 second under the molding conditions of an injection speed of 200 mm/s and a molding cycle of 13 seconds. When continuous molding is carried out under high temperature and high injection conditions, like such conditions, gas is generated and accumulates inside the cylinder. The cycle was stopped and the nozzle was retracted and, after measuring the time (seconds) until the resin leaked out from the nozzle tip, the amount (g) of the liquid crystal polyester resin leaking out from the nozzle tip in 10 seconds was measured. In Table 2, the time (seconds) until leakage is indicated as "drooling start time (s)" and the amount (g) of the liquid crystal polyester resin leaking from the nozzle tip in 10 seconds is indicated as "drooling amount (g)." The longer the drooling start time, the better, and the time of 10 seconds or more is preferable. The smaller the amount of drooling, the better, and it is preferably less than 1 g.

(7) Evaluation of Flame Retardancy

The liquid crystal polyester resin or liquid crystal polyester resin composition was dried at 150°C for 3 hours using a hot air dryer, and then subjected to an NEX1000 injection molding machine (manufactured by NISSEI PLASTIC INDUSTRIAL CO., LTD.) under molding conditions of a cylinder temperature of the melting point of the liquid crystal polyester resin + 10°C, a mold temperature of 90°C and an injection speed of 100 mm/s to obtain five strip-shaped combustion test pieces of 13 mm wide × 125 mm long × 0.38 mm thick. The five combustion test pieces thus obtained were used to evaluate the flame retardancy in accordance with the evaluation criteria set forth in the UL94 vertical test. For each test specimen, the time until the flame was extinguished after the first and second flame contacts was measured, and the total combustion time for the five test pieces was taken as the burning time. In Table 2, the combustion time is indicated as "combustion time (s)". The shorter the total combustion time of the five test pieces ("combustion time (s)"), the better the flame retardancy, and it is preferably 50 seconds or less.

(8) Total Amount of Aromatic Carboxylic Acid and Acetic Acid generated from Molded Article

The molded article (5 g) obtained by the method mentioned in (7) was weighed, and the amounts of the aromatic carboxylic acid and acetic acid generated from the molded article (ppm) was calculated in the same manner as in (4), except that the heat treatment was carried out at 280°C for 1 hour. In Tables 2 and 3, this is indicated as "amount of gas generated from molded article."

[Example 1]

In a 5 L stainless steel reaction vessel equipped with a stirring blade and a distillation tube, 808 parts by weight of p-hydroxybenzoic acid (HBA), 88 parts by weight of 6-hydroxy-2-naphthoic acid (HNA), 229 parts by weight of 4,4'-dihydroxybiphenyl (DHB), 166 parts by weight of hydroquinone (HQ), 428 parts by weight of terephthalic acid (TPA), 19 parts by weight of isophthalic acid (IPA), and 1,288 parts by weight (1.07 equivalents of the total of phenolic hydroxyl groups) of acetic anhydride were charged and, after reacting at 145°C for 120 minutes while stirring in a nitrogen gas atmosphere, the temperature was raised from 145°C to 360°C over 320 minutes. At this time, temperature rising was controlled so that the average temperature rising rate from 230°C to 250°C was 0.16°C/min. Thereafter, the polymerization temperature was maintained at 360°C and the pressure was reduced to 1.0 torr (133 Pa) over 1.0 hour. After continuously reacting, the polymerization was completed when the stirring torque reached a predetermined value. At this time, the reaction time at a temperature of the melting point Tm of the liquid crystal polyester resin or higher was 135 minutes. Then, the polymer was extruded into strands through a spinneret with one circular outlet having a diameter of 6 mm, followed by pelletization using a cutter to obtain a liquid crystal polyester resin (A-1). The polymerization was carried out using raw materials in which the iron atoms contained in the monomers HBA, HNA, DHB, HQ, TPA and IPA were 1, 1, 1, 0.1, 0.1 and 0.1 ppm, respectively. The value of the above-mentioned [aromatic diol]/[aromatic dicarboxylic acid], which is the ratio of the raw materials charged, is indicated as "[diol]/[dicarboxylic acid]" in Table 1 (the same applies to Examples 2 to 10 and Comparative Examples 1 to 4).

The amounts of the aromatic carboxylic acid and acetic acid generated from the liquid crystal polyester resin were calculated by the method mentioned in (4) above, and the amounts of TPA, IPA, benzoic acid and acetic acid generated were 44, 9, 15 and 11 ppm, respectively. In Table 2, the total amount is indicated as "amount of gas generated" (the same applies to Examples 2 to 10 and Comparative Examples 1 to 4).

[Example 2]

In the same manner as in Example 1, except that the amounts of the monomers charged were changed to 236

parts by weight of DHB and 169 parts by weight of HQ, a liquid crystal polyester resin (A-2) was obtained. The amounts of the aromatic carboxylic acid and acetic acid generated from the liquid crystal polyester resin were calculated by the method mentioned in (4) above, and the amounts of TPA, IPA, benzoic acid and acetic acid generated were 34, 9, 10 and 15 ppm, respectively.

[Example 3]

In the same manner as in Example 1, except that temperature rising was controlled so that the average temperature rising rate from 230°C to 250°C was 0.50°C/min, a liquid crystal polyester resin (A-3) was obtained.

The amounts of the aromatic carboxylic acid and acetic acid generated from the liquid crystal polyester resin were calculated by the method mentioned in (4) above, and the amounts of TPA, IPA, benzoic acid and acetic acid generated were 76, 13, 20 and 5 ppm, respectively.

[Example 4]

In the same manner as in Example 1, except that the amount of the monomer charged was changed to 161 parts by weight of HQ, a liquid crystal polyester resin (A-4) was obtained. The amounts of the aromatic carboxylic acid and acetic acid generated from the liquid crystal polyester resin were calculated by the method mentioned in (4) above, and the amounts of TPA, IPA, benzoic acid and acetic acid generated were 83, 19, 22 and 25 ppm, respectively.

[Example 5]

In the same manner as in Example 1, except that 0.13 part by weight of iron powder was further added when the monomers were charged, a liquid crystal polyester resin (A-5) was obtained.

The amounts of the aromatic carboxylic acid and acetic acid generated from the liquid crystal polyester resin were calculated by the method mentioned in (4) above, and the amounts of TPA, IPA, benzoic acid and acetic acid generated were 110, 38, 38 and 23 ppm, respectively.

[Example 6]

In the same manner as in Example 1, except that polymerization was carried out using a 5 L reaction vessel made of Hastelloy and raw materials containing HBA, HNA, DHB, HQ, TPA and IPA as monomers, each of which contained less than 0.1 ppm of iron atoms., a liquid crystal polyester resin (A-6) was obtained.

The amounts of the aromatic carboxylic acid and acetic acid generated from the liquid crystal polyester resin were calculated by the method mentioned in (4) above, and the amounts of TPA, IPA, benzoic acid and acetic acid generated were 101, 31, 22 and 31 ppm, respectively.

[Example 7]

In the same manner as in Example 1, except that the amounts of the monomers charged were changed to 873 parts by weight of HBA and no HNA (0 parts by weight), a liquid crystal polyester resin (A-7) was obtained.

The amounts of the aromatic carboxylic acid and acetic acid generated from the liquid crystal polyester resin were calculated by the method mentioned in (4) above, and the amounts of TPA, IPA, benzoic acid and acetic acid generated were 116, 48, 50 and 50 ppm, respectively.

The amounts of the aromatic carboxylic acid and acetic acid generated from the molded article were calculated by the method mentioned in (8) above, and the amounts of TPA, IPA, benzoic acid and acetic acid generated were 40, 17, 17 and 17 ppm, respectively.

[Example 8]

In the same manner as in Example 1, except that the amounts of the monomers charged were changed to 369 parts by weight of TPA and 78 parts by weight of IPA, a liquid crystal polyester resin (A-8) was obtained.

The amounts of the aromatic carboxylic acid and acetic acid generated from the liquid crystal polyester resin were calculated by the method mentioned in (4) above, and the amounts of TPA, IPA, benzoic acid and acetic acid generated were 34, 49, 33 and 25 ppm, respectively.

The amounts of the aromatic carboxylic acid and acetic acid generated from the molded article were calculated by the method mentioned in (8) above, and the amounts of TPA, IPA, benzoic acid, and acetic acid generated were 12, 17, 11, and 9 ppm, respectively.

[Example 9]

In the same manner as in Example 1, except that the amounts of the monomers charged were changed to 447 parts by weight of TPA and no IPA (0 part by weight), a liquid crystal polyester resin (A-9) was obtained.
The amounts of the aromatic carboxylic acid and acetic acid generated from the liquid crystal polyester resin were calculated by the method mentioned in (4) above, and the amounts of TPA, IPA, benzoic acid and acetic acid generated were 121, 0, 22 and 25 ppm, respectively.
The amounts of the aromatic carboxylic acid and acetic acid generated from the molded article were calculated by the method mentioned in (8) above, and the amounts of TPA, IPA, benzoic acid and acetic acid generated were 44, 0, 8 and 9 ppm, respectively.

[Example 10]

In the same manner as in Example 1, except that the amounts of monomers charged were changed to HBA 970 parts by weight, no HNA added (0 parts by weight), DHB 314 parts by weight, HQ 81 parts by weight, TPA 358 parts by weight, and IPA 31 parts by weight, a liquid crystal polyester resin (A-10) was obtained.
The amounts of the aromatic carboxylic acid and acetic acid generated from the liquid crystal polyester resin were calculated by the method mentioned in (4) above, and the amounts of TPA, IPA, benzoic acid and acetic acid generated were 130, 50, 35 and 62 ppm, respectively.
The amounts of the aromatic carboxylic acid and acetic acid generated from the molded article were calculated by the method mentioned in (8) above, and the amounts of TPA, IPA, benzoic acid and acetic acid generated were 42, 16, 11 and 20 ppm, respectively.

[Comparative Example 1]

In a 5 L stainless steel reaction vessel equipped with a stirring blade and a distillation tube, 932 parts by weight of HBA, 293 parts by weight of DHB, 74 parts by weight of HQ, 344 parts by weight of TPA, 30 parts by weight of IPA and 1,228 parts by weight of acetic anhydride (1.07 equivalents of the total of phenolic hydroxyl groups) of acetic anhydride were charged and, after reacting at 145°C for 150 minutes while stirring in a nitrogen gas atmosphere, the temperature was raised from 145°C to 360°C over 240 minutes. At this time, temperature rising was controlled so that the average temperature rising rate from 230°C to 250°C was 0.90°C/min. Thereafter, the polymerization temperature was maintained at 360°C and the pressure was reduced to 1.0 torr (133 Pa) over 1.0 hour. After continuously reacting, the polymerization was completed when the stirring torque reached a predetermined value. At this time, the reaction time at a temperature of the melting point Tm of the liquid crystal polyester resin or higher was 135 minutes. Then, the polymer was extruded into strands through a spinneret with one circular outlet having a diameter of 6 mm, followed by pelletization using a cutter to obtain a liquid crystal polyester resin (A'-11). The other conditions are the same as in Example 1.
The amounts of the aromatic carboxylic acid and acetic acid generated from the liquid crystal polyester resin were calculated by the method mentioned in (4) above, and the amounts of TPA, IPA, benzoic acid and acetic acid generated were 160, 50, 50 and 96 ppm, respectively.
The amounts of the aromatic carboxylic acid and acetic acid generated from the molded article were calculated by the method mentioned in (8) above, and the amounts of TPA, IPA, benzoic acid and acetic acid generated were 57, 18, 18 and 34 ppm, respectively.

[Comparative Example 2]

In the same manner as in Comparative Example 1, except that the reaction time at or above the melting point Tm of the liquid crystal polyester resin was changed to 175 minutes, a liquid crystal polyester resin (A'-12) was obtained.
The amounts of the aromatic carboxylic acid and acetic acid generated from the liquid crystal polyester resin were calculated by the method mentioned in (4) above, and the amounts of TPA, IPA, benzoic acid and acetic acid generated were 210, 65, 51 and 85 ppm, respectively.
The amounts of the aromatic carboxylic acid and acetic acid generated from the molded article were calculated by the method mentioned in (8) above, and the amounts of TPA, IPA, benzoic acid and acetic acid generated were 73, 22, 17 and 29 ppm, respectively.

[Comparative Example 3]

In the same manner as in Comparative Example 1, except that the amounts of the monomers charged were changed to 932 parts by weight of HBA, 251 parts by weight of DHB, 99 parts by weight of HQ, 284 parts by weight of TPA,

and 90 parts by weight of IPA, and the reaction time at the melting point Tm of the liquid crystal polyester resin or higher was changed to 175 minutes, a liquid crystal polyester resin (A'-13) was obtained.

The amounts of the aromatic carboxylic acid and acetic acid generated from the liquid crystal polyester resin were calculated by the method mentioned in (4) above, and the amounts of TPA, IPA, benzoic acid and acetic acid generated were 225, 100, 62 and 90 ppm, respectively.

The amounts of the aromatic carboxylic acid and acetic acid generated from the molded article were calculated by the method mentioned in (8) above, and the amounts of TPA, IPA, benzoic acid and acetic acid generated were 80, 36, 22 and 32 ppm, respectively.

[Comparative Example 4]

In the same manner as in Example 1, except that the amount of the monomer charged was 161 parts by weight of hydroquinone (HQ) and temperature rising was controlled so that the average temperature increase rate from 230°C to 250°C was 0.50°C/min, a liquid crystal polyester resin (A'-14) was obtained.

The amounts of the aromatic carboxylic acid and acetic acid generated from the liquid crystal polyester resin were calculated by the method mentioned in (4) above, and the amounts of TPA, IPA, benzoic acid and acetic acid generated were 189, 11, 58 and 79 ppm, respectively.

The amounts of the aromatic carboxylic acid and acetic acid generated from the molded article were calculated by the method mentioned in (8) above, and the amounts of TPA, IPA, benzoic acid, and acetic acid generated were 61, 4, 19, and 26 ppm, respectively.

The liquid crystal polyester resins obtained in Examples 1 to 10 and Comparative Examples 1 to 4 were evaluated with respect to the above items (1) to (8). The results are shown in Tables 1 and 2.

[Table 1]

| | Liquid crystal polyester resin | Structural unit (I) (mol%) | Structural unit (II) (mol%) | Structural unit (III) (mol%) | Structural unit (IV) (mol%) | Structural unit (V) (mol%) | Structural unit (VI) (mol%) | [II]/ [I] | [III]/ [II] + [III] | [Diol]/ [Dicarboxylic acid] |
|---|---|---|---|---|---|---|---|---|---|---|
| Example 1 | A-1 | 4.0 | 1.0 | 22.0 | 50.0 | 12.5 | 10.5 | 0.25 | 0.96 | 1.02 |
| Example 2 | A-2 | 4.0 | 1.0 | 22.0 | 50.0 | 12.5 | 10.5 | 0.25 | 0.96 | 1.04 |
| Example 3 | A-3 | 4.0 | 1.0 | 22.0 | 50.0 | 12.5 | 10.5 | 0.25 | 0.96 | 1.02 |
| Example 4 | A-4 | 4.0 | 1.0 | 22.0 | 50.0 | 12.5 | 10.5 | 0.25 | 0.96 | 1.00 |
| Example 5 | A-5 | 4.0 | 1.0 | 22.0 | 50.0 | 12.5 | 10.5 | 0.25 | 0.96 | 1.02 |
| Example 6 | A-6 | 4.0 | 1.0 | 22.0 | 50.0 | 12.5 | 10.5 | 0.25 | 0.96 | 1.02 |
| Example 7 | A-7 | 0 | 1.0 | 22.0 | 54.0 | 12.5 | 10.5 | - | 0.96 | 1.02 |
| Example 8 | A-8 | 4.0 | 4.0 | 19.0 | 50.0 | 12.5 | 10.5 | 1 | 0.83 | 1.02 |
| Example 9 | A-9 | 4.0 | 0 | 23.0 | 50.0 | 12.5 | 10.5 | 0 | 1 | 1.02 |
| Example 10 | A-10 | 0 | 1.6 | 18.4 | 60.0 | 6.0 | 14.0 | - | 0.92 | 1.04 |
| Comparative Example 1 | A'-11 | 0 | 1.6 | 18.4 | 60.0 | 6.0 | 14.0 | - | 0.92 | 1.00 |
| Comparative Example 2 | A'-12 | 0 | 1.6 | 18.4 | 60.0 | 6.0 | 14.0 | - | 0.92 | 1.00 |
| Comparative Example 3 | A'-13 | 0 | 4.8 | 15.2 | 60.0 | 8.0 | 12.0 | - | 0.76 | 1.00 |
| Comparative Example 4 | A'-14 | 4.0 | 1.0 | 22.0 | 50.0 | 12.5 | 10.5 | 0.25 | 0.96 | 1.00 |

[Table 2]

| | Liquid crystal polyester resin | Tm (°C) | Melt viscosity (Pa·s) | Amount of gas generated (ppm) | Amount of gas generated of molded article (ppm) | Iron content (ppm) | Drooling properties | | Flame retardancy |
|---|---|---|---|---|---|---|---|---|---|
| | | | | | | | Drooling start time (s) | Drooling amount (g) | Combustion time (s) |
| Example 1 | A-1 | 332 | 7 | 79 | 26 | 5 | 23.0 | 0.28 | 19 |
| Example 2 | A-2 | 332 | 7 | 68 | 23 | 5 | 23.0 | 0.27 | 10 |
| Example 3 | A-3 | 332 | 7 | 114 | 40 | 5 | 20.0 | 0.31 | 22 |
| Example 4 | A-4 | 332 | 7 | 149 | 55 | 5 | 18.0 | 0.53 | 24 |
| Example 5 | A-5 | 332 | 7 | 209 | 71 | 102 | 15.0 | 0.70 | 26 |
| Example 6 | A-6 | 332 | 7 | 185 | 63 | Not contained | 14.0 | 0.70 | 25 |
| Example 7 | A-7 | 336 | 7 | 264 | 91 | 5 | 14.0 | 0.88 | 38 |
| Example 8 | A-8 | 330 | 7 | 141 | 49 | 5 | 20.0 | 0.43 | 26 |
| Example 9 | A-9 | 334 | 7 | 168 | 61 | 5 | 18.0 | 0.50 | 24 |
| Example 10 | A-10 | 345 | 7 | 277 | 89 | 5 | 12.5 | 0.89 | 39 |
| Comparative Example 1 | A'-11 | 345 | 7 | 356 | 127 | 5 | 2.0 | 1.10 | 59 |
| Comparative Example 2 | A'-12 | 348 | 12 | 411 | 141 | 5 | 7.2 | 1.00 | 72 |
| Comparative Example 3 | A'-13 | 333 | 11 | 477 | 170 | 5 | 7.9 | 1.15 | 99 |
| Comparative Example 4 | A'-14 | 332 | 7 | 337 | 110 | 5 | 4.0 | 1.50 | 55 |

A filler was further added to the liquid crystal polyester resins obtained in Example 1 and Comparative Example 1 to fabricate liquid crystal polyester resin compositions. The fillers used in Examples and Comparative Examples are as follows.

Filler (B)

(B-1) Milled fiber (40M-10A) manufactured by Nippon Electric Glass Co., Ltd.

[Example 11 and Comparative Example 5]

Using a twin-screw extruder TEM35B equipped with a side feeder manufactured by SHIBAURA MACHINE CO., LTD., each of the liquid crystal polyester resins (A-1, A'-11) obtained in production examples was fed from a hopper in the compounding amount shown in Table 3, the filler (B-1) was fed from a side feeder in the compounding amount shown in Table 3, the cylinder temperature was set to the melting point of the liquid crystal polyester resin + 10°C, and pellets were obtained by melt-kneading. The obtained pellets of the liquid crystal polyester resin composition were hot-air dried and then evaluated in the same manner as in (6) and (7), and the results are shown in Table 3.

For Example 11, the amounts of the aromatic carboxylic acid and acetic acid generated from the molded article were calculated by the method mentioned in (8) above. As a result, the amounts of TPA, IPA, benzoic acid, and acetic acid generated were 16, 4, 5, and 7 ppm, respectively.

For Comparative Example 5, the amounts of the aromatic carboxylic acid and acetic acid generated from the molded article were calculated using the method mentioned in (8) above. As a result, the amounts of TPA, IPA, benzoic acid, and acetic acid generated were 60, 23, 25, and 45 ppm, respectively.

[Table 3]

| | Liquid crystal polyester resin (parts by weight) | Filler (parts by weight) | Amount of gas generated of molded article (ppm) | Drooling properties | | Flame retardancy |
|---|---|---|---|---|---|---|
| | | | | Drooling start time (s) | Drooling amount (g) | Combustion time (s) |
| Example 11 | A-1 (100) | B-1 (43) | 32 | 26.0 | 0.28 | 16 |
| Comparative Example 5 | A'-11 (100) | B-1 (43) | 153 | 4.0 | 1.30 | 58 |

From the results in Tables 1 to 3, it can be seen that by using a liquid crystal polyester resin having the total amount of an aromatic carboxylic acid and acetic acid of 300 ppm or less, or a liquid crystal polyester resin composition using the resin, the total amounts of the aromatic carboxylic acid and acetic acid generated from a molded article at 280°C are adjusted to 100 ppm or less, thus obtaining a liquid crystal polyester resin, a resin composition and a molded article, which exhibit suppressed drooling and are excellent in flame retardancy.

Industrial Applicability

The liquid crystal polyester resin and liquid crystal polyester resin composition of the present invention are excellent in flame retardancy and exhibit suppressed drooling during injection molding, and therefore can be suitably used for connectors, relays, switches, coil bobbins, and actuator parts for camera modules, and are particularly suitable for connectors, which have become increasingly thin-walled and fine-pitch in recent years.

Reference Signs List

(A) Pellet sealing and heating section
(B) Tube sealing section
(C) Generated gas collecting section
(D) Liquid crystal polyester resin pellets

## Claims

1. A liquid crystal polyester resin comprising 20 to 80 mol% of a structural unit derived from an aromatic hydroxycarboxylic acid, 10 to 40 mol% of a structural unit derived from an aromatic diol and 10 to 40 mol% of a structural unit derived from an aromatic dicarboxylic acid, relative to 100 mol% of the total structural units of the liquid crystal polyester resin, wherein the following requirement ($\alpha$) is satisfied:

 Requirement ($\alpha$): when the liquid crystal polyester resin is maintained at a temperature of the melting point Tm + 20°C under reduced pressure of 13.3 kPa or less for 60 minutes, the total amount of an aromatic carboxylic acid and acetic acid generated from the liquid crystal polyester resin is less than 300 ppm; and
 the melting point Tm of the liquid crystal polyester resin is an endothermic peak temperature determined as follows: after observation of an endothermic peak temperature ($Tm_1$) observed when the liquid crystal polyester resin is heated under temperature rising conditions of 20°C/min from room temperature in differential scanning calorimetry, the liquid crystal polyester resin is maintained at a temperature of $Tm_1$ + 20°C for 5 minutes, and then the liquid crystal polyester resin is once cooled to room temperature under temperature falling conditions of 20°C/min and then heated again under temperature rising conditions of 20°C/min.

2. The liquid crystal polyester resin according to claim 1, which contains 0.1 to 100 ppm of iron atoms.

3. The liquid crystal polyester resin according to claim 1 and 2, which is a liquid crystal polyester resin including the following structural unit (I) and satisfying the following formula (a):

$$2 \leq [I] \leq 20 \qquad (a)$$

 where [I] represents the content (mol%) of the following structural unit (I) relative to 100 mol% of the total structural units of the liquid crystal polyester resin.

[Chemical Formula 1]

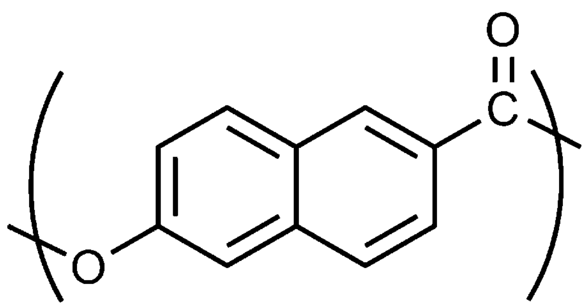

(I)

4. The liquid crystal polyester resin according to claims 1 to 3, which is a liquid crystal polyester resin including the following structural units (I) and (II), and satisfying the following formulas (b) and (c):

$$0.01 \leq [II] \leq 5 \qquad (b)$$

$$[II]/[I] < 1 \qquad (c)$$

 where [I] and [II] represent the content (mol%) of each of the following structural units (I) and (II) relative to 100 mol% of the total structural units of the liquid crystal polyester resin.

[Chemical Formula 2]

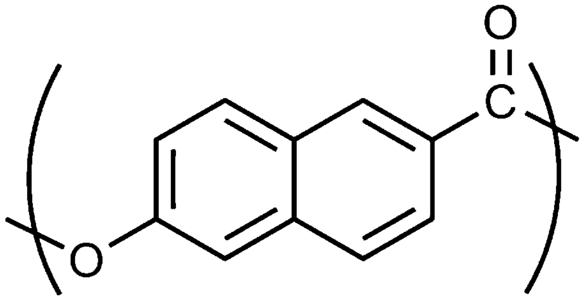

(I)

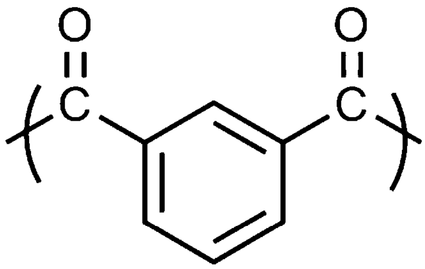

(II)

**5.** The liquid crystal polyester resin according to any one of claims 1 to 4, which is a liquid crystal polyester including the following structural units (II) and (III) and satisfying the following formula (d):

$$0.92 < [III]/([II] + [III]) < 1 \qquad (d)$$

where [II] and [III] represent the content (mol%) of each of the following structural units (II) and (III) relative to 100 mol% of the total structural units of the liquid crystal polyester resin.

[Chemical Formula 3]

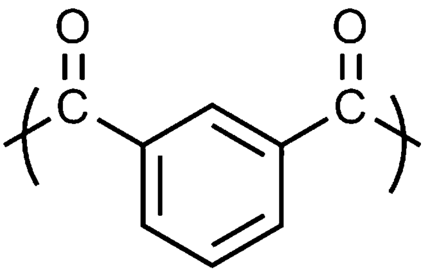

(II)

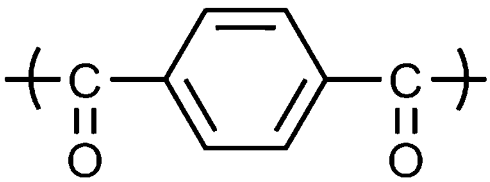

(III)

**6.** A method for producing the liquid crystal polyester resin according to any one of claims 1 to 5, comprising reacting a hydroxycarboxylic acid and/or a diol with acetic anhydride to acetylate at least part of phenolic hydroxyl groups, followed by deacetylation polymerization with a dicarboxylic acid to produce the liquid crystal polyester resin, wherein

a ratio of raw material monomers charged satisfies the following formula (e):

$$1 < [\text{aromatic diol}]/[\text{aromatic dicarboxylic acid}] < 1.5 \qquad (e)$$

where [aromatic diol] and [aromatic dicarboxylic acid] represent the amounts (mols) of the aromatic diol and aromatic dicarboxylic acid charged during the production of the liquid crystal polyester resin.

**7.** A liquid crystal polyester resin composition comprising 10 to 200 parts by weight of a filler relative to 100 parts by weight of the liquid crystal polyester resin according to any one of claims 1 to 5.

**8.** A molded article comprising the liquid crystal polyester resin according to any one of claims 1 to 5, or the liquid crystal polyester resin composition according to claim 7.

**9.** The molded article according to claim 8, which is any one selected from the group consisting of a connector, a relay, a switch, a coil bobbin and an actuator component of a camera module.

**10.** A molded article comprising a liquid crystal polyester resin comprising 20 to 80 mol% of a structural unit derived from an aromatic hydroxycarboxylic acid, 10 to 40 mol% of a structural unit derived from an aromatic diol and 10 to 40 mol% of a structural unit derived from an aromatic dicarboxylic acid, relative to 100 mol% of the total structural units of the liquid crystal polyester resin, wherein the total amount of the aromatic carboxylic acid and acetic acid generated when the molded article is maintained at 280°C for 60 minutes under reduced pressure of 13.3 kPa or less is less than 100 ppm.

Fig. 1

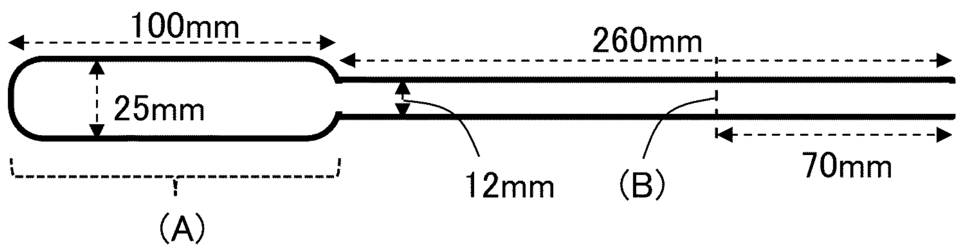


Fig. 2

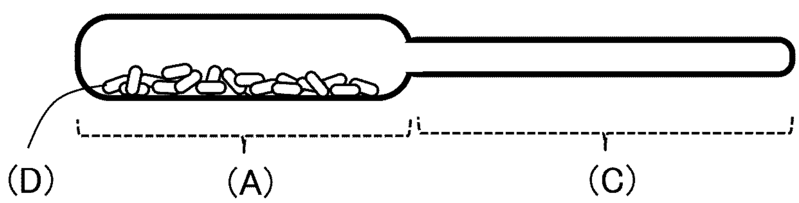

**INTERNATIONAL SEARCH REPORT**

International application No.
**PCT/JP2024/015713**

**A. CLASSIFICATION OF SUBJECT MATTER**

***C08G 63/60***(2006.01)i; ***C08K 3/013***(2018.01)i; ***C08L 67/00***(2006.01)i
FI: C08G63/60; C08K3/013; C08L67/00

According to International Patent Classification (IPC) or to both national classification and IPC

**B. FIELDS SEARCHED**

Minimum documentation searched (classification system followed by classification symbols)

C08G63/60; C08K3/013; C08L67/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2017-0070866 A (SE YANG POLYMER CO., LTD.) 23 June 2017 (2017-06-23) claims 1, 11, paragraphs [0057], [0059], [0070]-[0072], [0074], examples | 1-5, 7-10 |
| Y | claims 1, 11, paragraphs [0057], [0059], [0070]-[0072], [0074], examples | 6 |
| X | JP 2022-56854 A (TORAY INDUSTRIES, INC.) 11 April 2022 (2022-04-11) claims 1, 6, paragraphs [0036], [0039], [0040], [0078], examples | 1-5, 7-10 |
| Y | claims 1, 6, paragraphs [0036], [0039], [0040], [0078], examples | 6 |
| Y | JP 64-81820 A (AKZO N.V.) 28 March 1989 (1989-03-28) page 4, upper left column, lines 5-10 | 6 |
| A | entire text | 1-5, 7-10 |
| A | CN 101210068 A (CHANGCHUN SYNTHETIC RESIN PLANT CO., LTD.) 02 July 2008 (2008-07-02) entire text | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/015713**

| Patent document cited in search report | Publication date (day/month/year) | Patent family member(s) | Publication date (day/month/year) |
|---|---|---|---|
| KR 10-2017-0070866 A | 23 June 2017 | (Family: none) | |
| JP 2022-56854 A | 11 April 2022 | (Family: none) | |
| JP 64-81820 A | 28 March 1989 | US 4841014 A<br>column 3, lines 51-57<br>EP 297311 A2<br>DE 3721256 A1 | |
| CN 101210068 A | 02 July 2008 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006089714 A
- JP 2009127025 A
- WO 2012090407 A
- WO 2018101214 A